(19) Europäisches Patentamt
European Patent Office
Office européen des brevets

(11) **EP 4 057 088 B1**

(12) **EUROPÄISCHE PATENTSCHRIFT**

(45) Veröffentlichungstag und Bekanntmachung des Hinweises auf die Patenterteilung:
**08.10.2025 Patentblatt 2025/41**

(21) Anmeldenummer: **21162021.6**

(22) Anmeldetag: **11.03.2021**

(51) Internationale Patentklassifikation (IPC):
*G05B 19/4061* (2006.01)  *B25J 9/16* (2006.01)

(52) Gemeinsame Patentklassifikation (CPC):
**B25J 9/1674; B25J 9/1676; G05B 19/4061;**
G05B 2219/39176; G05B 2219/40202;
G05B 2219/49138

(54) **SICHERER BETRIEB EINER MEHRACHSKINEMATIK**

SECURE OPERATION OF MULTIPLE-AXLE KINEMATIC

FONCTIONNEMENT SÉCURISÉ D'UNE CINÉMATIQUE À AXES MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.09.2022 Patentblatt 2022/37**

(73) Patentinhaber: **Siemens Aktiengesellschaft**
**80333 München (DE)**

(72) Erfinder:
• **Budday, Dominik**
**91058 Erlangen (DE)**

• **Burmeister, Sören**
**90765 Fürth (DE)**
• **Le, Minh**
**06406 Bernburg (DE)**
• **Stein, Alexander**
**90587 Veitsbronn (DE)**
• **Walter, Maximilian**
**90408 Nürnberg (DE)**

(74) Vertreter: **Siemens Patent Attorneys**
**Postfach 22 16 34**
**80506 München (DE)**

(56) Entgegenhaltungen:
**DE-A1- 102005 011 143   US-A1- 2019 262 993**

**Beschreibung**

Die Erfindung betrifft ein Verfahren zum Einrichten eines sicheren Betriebs einer Mehrachskinematik, ein Verfahren zum sicheren Betreiben einer Mehrachskinematik und ein entsprechendes Computerprogrammprodukt.

In modernen Fertigungsanlagen und Fabriken kommen vermehrt Roboter, Handlingssysteme, Kräne etc. oder generell Mehrachskinematiken verschiedenster Ausführungen zum Einsatz. Genauso sind Anwendungen mit Kinematiken in der Medizintechnik anzutreffen. Für die Sicherheit des Betriebs solcher Mehrachskinematiken in den Anlagen ist es essenziell, dass eine sicherheitsgerichtete Überwachung der Kinematik oder Teile der Kinematik umsetzbar ist. Der sichere Betrieb von Mehrachskinematiken ist dabei für die Vermeidung von Kollisionen mit Objekten in der Umgebung der Mehrachskinematik und insbesondere für die Vermeidung von gefährlichen Unfällen bei Aufenthalt von Menschen in der Umgebung der Mehrachskinematik notwendig.

In Steuerungen von Robotern oder Manipulatoren können dafür Überwachungsfunktionen vorgesehen sein, wie beispielsweise eine Überwachung einer kartesischen Geschwindigkeit eines Punktes. Dabei wird aus sicheren Achspositionen eine kartesische Geschwindigkeit eines Punktes, beispielsweise eines Gelenkes oder des Tool Center Points, berechnet. Anschließend wird geprüft, ob eine Parametrisierung der Geschwindigkeitsgrenze überschritten ist. Ein Überschreiten wird durch einen sicheren Ausgang angezeigt.

Ebenso ist eine sichere Zonenüberwachung bekannt, bei der aus sicheren Achspositionen eine Position und eine Orientierung von beweglichen Kinematikzonen, beispielsweise Quadern oder Kugeln, berechnet wird. Diese werden so parametriert, dass sie die beweglichen Teile der Kinematik vollständig beinhalten, sogenannte Hüllkörper bilden. Anschließend wird für jede Kinematikzone geprüft, ob sie eine zuvor definierte, feststehende Arbeitsraumzone verlässt oder ob sie sich mit zumindest einer zuvor definierten, feststehenden Schutzzone überlappt. Das Verlassen des Arbeitsraumes oder eine Überlappung mit Schutzzonen wird mithilfe von sicheren Ausgängen angezeigt.

Ferner ist die Funktion einer Überwachung einer sicheren Orientierung bekannt. Aus sicheren Achspositionen wird die Orientierung einer zuvor festgelegten Achse, beispielsweise eine Orientierung eines am Tool Center Point befestigten Messers, berechnet. Diese Orientierung wird mit einem Sollwert verglichen und der Unterschied wird an einem sicheren Ausgang ausgegeben.

Ein Endanwender kann die sicheren Ausgänge mit Funktionen verschalten, die eine geeignete Sicherheitsreaktion, beispielsweise den Stopp einer Maschine einleiten oder eine Geschwindigkeitsbegrenzung aktivieren.

Eine sichere Überwachung basiert in der Regel auf sicheren Positionen der einzelnen Achsen als Grundlage für die Ausgabe und gegebenenfalls das Einleiten einer Sicherheitsreaktion. Dabei können die Positionen der einzelnen Achsen nur mit einer bestimmten Genauigkeitsabweichung ermittelt werden. In der Praxis sind Sensorwerte fehlerbehaftet. Solche Fehler müssen durch die Sicherheitsfunktion abgebildet werden. Ungenauigkeiten entstehen auch durch Trägheiten und dadurch verursachte Nachlaufwege.

Bekannte klassische statistische Fehlerrechnung, beispielsweise basierend auf guide of uncertainty in measurements (GUM)-Verfahren, stellen keine zufriedenstellende Berücksichtigung der auftretenden Fehler dar, da hier mittlere Abweichungen berechnet werden, und nicht eine Abweichung im schlechtesten Fall.

Es ist ferner bekannt, lediglich allgemeine Korrekturwerte ohne Kenntnis der spezifischen im Einsatz befindlichen Kinematik mit ihren Daten und der Qualität der eingesetzten Sensoren zu verwenden die Angabe solcher allgemeiner Korrekturwerte muss für einen sicherheitsgerichteten Betrieb sehr konservativ sein, sodass die Verfügbarkeit der Mehrachskinematik im Einsatz oftmals unnötigerweise reduziert ist.

Aus der Offenlegungsschrift US 2019/0262993 A1 ist ein Roboter bekannt mit dynamischer Safety Zone, wobei ein Raum um den Roboter herum überwacht wird. Die dynamischen Zonen können vergrößert werden, wenn der Roboter sich beispielsweise schnell bewegt. Zudem können die Zonen verändert werden je nach Art des Sensors, der im Betrieb verwendet wird.

Vor diesem Hintergrund ist es eine Aufgabe der vorliegenden Erfindung, eine Berücksichtigung von Fehlern bei der sicheren Überwachung von Mehrachskinematiken zu verbessern. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren nach Anspruch 1.

Es wird für das vorliegende Verfahren davon ausgegangen, dass die Fehlerwerte von beteiligten Achsen bekannt sind. Es handelt sich bei den Fehlerwerten um die für eine konkrete Applikation oder einen konkreten Aufbau oder eine konkrete Anlage mit Einsatz der Mehrachskinematik relevanten Fehlerwerte, insbesondere axiale Fehlerwerte, welche Sensorauflösungen, Nachlaufwege etc. sein können. Ein axialer Fehlerwert ist relevant, wenn er für die Anwendung einer Sicherheitsfunktion zu berücksichtigen ist, weil er sich beispielsweise auf die tatsächliche kartesische Position, Geschwindigkeit oder Orientierung, die überwacht wird, auswirkt. Ein Fehlerwert liegt vor, wenn eine Abweichung zwischen tatsächlicher Position, Geschwindigkeit oder Orientierung der Achsen der Mehrachskinematik und von Sensoren gemeldeten Positionen, Geschwindigkeiten oder Orientierungen oder aufgrund von Steuerungsbefehlen vorgegebenen Sollpositionen, Sollgeschwindigkeiten oder Sollorientierungen besteht. Dieser Fehlerwert, der insbesondere Eingangsgrößen der Sicherheitsfunktion anhaftet, wird durch den ermittelten kartesischen Kompensationswert in der Sicherheitsfunktion berücksichtigt.

Je nachdem, welche Achsen für die Durchführung eines sicheren Betriebs überwacht werden müssen, ist nur für diese Achsen der zugehörige Fehlerwert anzugeben. Insbesondere sind alle beteiligten Achsen einer zu überwachenden Mehrachskinematik relevant für die Sicherheitsüberwachung und es werden insbesondere maximale Fehlerwerte aller vorhanden Achsen bereitgestellt.

Fehlerwerte sind in der Regel einem Maschinenbauer oder Endkunden oder einem Integrator bekannt. Über ein Softwarewerkzeug, welches beispielsweise in eine gängige Engineering Umgebung integriert ist, kann das Bereitstellen der bekannten Fehlerwerte vorteilhafter Weise durch den Endkunden oder Maschinenbauer selbst erfolgen. Beispielsweise wird das Verfahren während einer Projektierungs- oder Engineering-Phase durchgeführt.

Für das Ermitteln des Kompensationswertes gehen neben den bereitgestellten Fehlerwerten geometrische Parameter der Mehrachskinematik ein. Dies ermöglicht ein Kinematik-spezifisches Ermitteln des Kompensationswertes, bei dem die sich tatsächlich bei der konkreten Kinematik auswirkenden Fehler berücksichtigt werden. Je nach Aufgabe und Einsatzzweck von Mehrachskinematiken weichen diese in ihren geometrischen Parametern voneinander ab. Beispielsweise sind die Längen von Linearachsen, deren Neigung, die Anzahl hintereinander betriebener Achsen, die Ausgestaltung paralleler Achsen usw. für den Einsatzzweck der Kinematik optimiert.

Typischerweise liegen auch die geometrischen Parameter erst in einer Projektierungsphase eines Nutzers, beispielsweise einem Endkunden, Maschinenbauer oder Integrator, vor, sodass eine Berücksichtigung eines Kinematik-spezifischen Kompensationswertes bereits in die Sicherheitsfunktion, die beispielsweise als Software an den Nutzer geliefert wird, schwer möglich ist. Die Berücksichtigung der im konkreten Fall geltenden geometrischen Parameter ermöglichen vorteilhaft, dass der Kompensationswert nicht zu pessimistisch ausfällt.

In der Projektierungsphase kann ferner abgeleitet werden, welche Trajektorien für die Mehrachskinematik relevant sind, insbesondere, welche Trajektorien im Betrieb zu erwarten sind. Somit können vorteilhaft Fehler, die potentiell aufgrund von Kombinationen von Achspositionen zustande kommen könnten, ignoriert werden, wenn diese Kombinationen aufgrund der Trajektorien nicht eingenommen werden.

In der Regel werden beim Betrieb mit einer Sicherheitsfunktion mehrere Größen überwacht, beispielsweise die Positionen mehrerer bewegter Achsen und beispielsweise ferner jeweils Positionen und Geschwindigkeiten mehrerer bewegter Achsen. Beispielsweise bewirken verschiedene Stellungen, die während des Durchlaufens einer oder mehrerer Trajektorien eingenommen werden, verschiedene jeweils aktuelle Kompensationswerte. Beispielsweise treten je Trajektorie je Achse im Verlauf der Bewegung entlang der Trajektorie unterschiedliche Abweichungen jeweiliger Positionen oder Geschwindigkeiten oder Orientierung der beteiligten Achsen aufgrund der Fehlerfortpflanzung oder Abweichungsfortpflanzung auf. Für die Fehlerermittlung kann insbesondere die je Trajektorie oder insgesamt für alle Trajektorien auftretende maximale Abweichung für eine Größe der Sicherheitsfunktion ermittelt werden. Dieser für die konkrete Kinematik maximal mögliche Fehler aufgrund von Sensorfehlern oder Nachlaufwegen kann beispielsweise in der Projektierungsphase ermittelt und in einer späteren Betriebsphase von der Sicherheitsfunktion verwendet werden. Beispielsweise werden für mehrere Trajektorien mehrere Kompensationswerte ermittelt und für den späteren Einsatz hinterlegt.

Die ermittelten Kompensationswerte sind beispielsweise je Achse oder je Segment zu berücksichtigende Kompensationswerte. Somit sind beispielsweise für den Betrieb maximale Längen, um die Überwachungszonen je Segment zu vergrößern sind, oder maximale Geschwindigkeitsbeträge, um vorgesehene kartesische Geschwindigkeitsschranken zu verringern sind, ermittelbar. Ferner werden mit den ermittelten Kompensationswerten beispielsweise statische Zonen, die für die gesamte Kinematik gelten, im Falle von Schutzzonen vergrößert oder im Falle von Arbeitszonen verkleinert.

Die ermittelten Kompensationswerte entsprechen Werten von zu überwachenden Größen, die die möglichen auftretenden Fehler oder Abweichungen kompensieren.

Das vorgeschlagene Verfahren erreicht somit die Ermittlung eines Kompensationswertes einer Größe einer Sicherheitsfunktion individuell für eine Kinematik inklusive deren mit Unsicherheiten behafteten Achssensoren oder Nachlaufverhalten sowie für die mit der konkreten Kinematik abfahrbaren vorgesehenen Trajektorien.

Mit dem ermittelten Kompensationswert ist der sichere Betrieb derart einrichtbar, dass auch Ungenauigkeiten erfasster Positionen, die sich auf Größen einer vorgesehenen Sicherheitsfunktion auswirken, oder Abweichungen aufgrund von axialen Nachlaufwegen berücksichtigt werden. Mindestens eine Größe einer Sicherheitsfunktion, beispielsweise eine Abmessung einer Zone oder Orientierung einer Achse oder Position und/oder Geschwindigkeit eines Punktes auf der Kinematik, wird somit vorteilhaft um einen Kompensationswerterweitert. Die Sicherheitsüberwachung verwendet dann die mindestens eine Größe unter Berücksichtigung des ermittelten Kompensationswertes. Auf vorteilhafte Weise wird einerseits eine zu pessimistische Berücksichtigung von Fehlern, wie es beispielsweise bei einem für eine Vielzahl von Kinematiken gültigen Ansatz der Fall ist, vermieden, andererseits wird sichergestellt, dass alle für eine spezifische Kinematik relevanten Fehler aufgrund von Kombinationen und Verläufen von Achspositionen aufgrund der Trajektorien von der Sicherheitsfunktion berücksichtigt werden.

Beispielsweise werden bei der Ermittlung der Kompensationswerte auch numerische Fehler berücksichtigt, die beispielsweise durch approximative Algorithmen, iterative Verfahren, Rundungen beispielsweise bei Fließkomma- oder Festkommaarithmetik entstehen.

Erfindungsgemäß werden als Fehlerwerte Sensorauflösungen jeweiliger Achssensoren bereitgestellt. Es handelt sich bei den Achssensoren beispielsweise um an den jeweiligen Achsen vorgesehene Geber. Bei den bereitgestellten Fehlerwerten handelt es sich beispielsweise um maximal je Achssensor mögliche Sensorfehler. Die Ermittlung des Kompensationswertes in Abhängigkeit von den Sensorauflösungen sowie den geometrischen Parametern der Mehrachskinematik und den sich aus Trajektorien der Mehrachskinematik ergebenden Achswerten der jeweiligen Achsen ermöglicht einen sicheren Betrieb der Mehrachskinematik, bei dem im laufenden Betrieb der Kinematik die Größen von Sicherheitsfunktionen, beispielsweise Sicherheits-Zonengrößen, unter Berücksichtigung des Kompensationswertes ausreichend groß bemessen werden und zugleich keine zu pessimistische Berücksichtigung von Sensorfehlern nötig macht. Im späteren Betrieb zu berücksichtigende Sensorfehler oder Ungenauigkeiten aufgrund von Sensorauflösungen werden vorteilhaft bereits in einer Einrichtphase ermittelt.

Erfindungsgemäß werden als Fehlerwerte axiale Nachlaufwege bereitgestellt. Die Nachlaufwege hängen insbesondere von der wirkenden Achsträgheit oder Achslast oder der Achsgeschwindigkeit ab. Beispielsweise werden axiale Nachlaufwege in Tabellenform angegeben. Je Achse wird dann beispielsweise ein relevanter Worst-Case Wert angeben oder es wird eine Abhängigkeit eines Nachlaufweges von weiteren Achseigenschaften hinterlegt, so dass beispielsweise eine automatische oder dynamische Anpassung erfolgen kann.

Somit kann vorteilhaft in der Einrichtphase ein Kompensationswert ermittelt werden, der bei der Ausführung von Sicherheitsfunktionen zu berücksichtigen ist. Beispielsweise wird eine Größe einer Sicherheitsfunktion, beispielsweise eine Sicherheits-Zonengröße, angepasst, damit Sicherheitsreaktionen wie z.B. ein sicherer Stopp, auch unter Berücksichtigung der Nachlaufwege sicher ausgeführt werden. Somit werden vorteilhaft und insbesondere zusätzlich zur Berücksichtigung von Sensorauflösungen Unsicherheiten und Abweichungen von Sollwerten, die im Betrieb nach Einleiten einer Sicherheitsreaktion auftreten, berücksichtigt.

Je nachdem, welche Massen, Trägheiten und Geschwindigkeiten an Achsen vorherrschen können die Kompensationseffekte aufgrund von axialen Nachlaufwegen oder Sensorauflösungen überwiegen. Vorteilhafterweise werden beide Effekte ermittelt und die resultierenden maximalen Kompensationswerte letztlich berücksichtigt.

Gemäß einer Ausgestaltung werden ferner die geometrischen Parameter der Mehrachskinematik für das Einrichten bereitgestellt. Vorteilhafterweise gibt ein Nutzer innerhalb eines Projektierungsvorganges, der beispielsweise bei Inbetriebnahme einer Maschine oder bei einem Umrüsten erfolgt, geometrische Parameter der spezifischen Mehrachskinematik vor. Beispielsweise stellt er die Parameter mittels einer Benutzerschnittstelle des Engineeringprogramms bereit.

Die Parameter betreffen beispielsweise Längen von verschiedenen Segmenten einer Mehrachskinematik oder die vorgesehene Anzahl linearer oder paralleler Achsen sowie die vorgesehene Anzahl an Drehachsen etc. Auch die geometrischen Parameter können selbst fehlerbehaftet sein. Auch dieser Fehlerbeitrag kann in die Ermittlung des Kompensationswertes eingehen.

Gemäß einer Ausgestaltung werden die Trajektorien aus einer Menge von für die Mehrachskinematik vorgebbaren Trajektorien abgeleitet. Vorteilhafterweise werden in einer Projektierungsphase vor dem eigentlichen Betrieb der Kinematik die Trajektorien festgelegt, für die die Kinematik im späteren Betrieb geeignet sein soll und welche sie mithilfe einer Bewegungssteuerung abfahren soll. Dabei wird beispielsweise eine Vielzahl von Trajektorien vorgegeben, welche alternativ oder abwechselnd mit der Kinematik abgefahren werden. Zudem können leicht voneinander abweichende Kinematiken hinterlegt werden, um im späteren Betrieb Toleranzen ermöglichen zu können.

Gemäß einer Ausgestaltung werden die Trajektorien aus maximalen Wertebereichen für die jeweiligen Achsen abgeleitet. Bei dieser Ausgestaltung wird eine Vielzahl von Trajektorien aus den maximalen Wertebereichen der Achsen der Kinematik abgeleitet. Ist beispielsweise für alle bei einer konkreten Mehrachskinematik beteiligten Achsen jeweils der maximale Wertebereich bekannt, so können alle denkbaren Kombinationen von Achsstellungen ermittelt werden und für diese möglichen Kombinationen jeweils Kompensationswerte der für die Sicherheitsfunktion interessierenden Größen berechnet werden. Beispielsweise können so maximal zu erwartende Kompensationswerte im Voraus, d. h. vor einem Betrieb der Mehrachskinematik, für alle möglichen Stellungen und damit alle möglichen Bewegungen oder Trajektorien bestimmt werden und dann in die Kompensation von Größen der Sicherheitsfunktion eingehen.

So werden beispielsweise vorab für vorgesehene Überwachungszonen oder Überwachungssegmente Kompensationswerte berechnet, die für die spezifische Kinematik und die spezifischen Fehlerwerte der einzelnen Sensoren den Worst Case abbilden. Beispielsweise werden so Überwachungszonen vergrößert oder Grenzgeschwindigkeiten verringert, um im späteren Betrieb in einem Bewegungsablauf oder nach dem Einleiten einer Sicherheitsreaktion gefahrlos alle denkbaren Kinematikstellungen einnehmen zu können. Auch das Einführen neuer Bewegungsabläufe ist somit ohne erneute Ermittlung von Kompensationswerten möglich.

Gemäß einer Ausgestaltung beschreiben die Trajektorien eine Kombination von Achswerten aller Achsen über eine Zeit und werden insbesondere basierend auf einem Trace oder einer Simulation oder einer Beobachtung von Live-Daten während einer Bewegung der Mehrachskinematik gebildet. Ein Trace beschreibt dabei Positionen aller Achsen zu verschiedenen Zeitpunkten. Die Zeitpunkte liegen flexibel nahe zueinander zeitlich beabstandet. In einem Trace werden aus Probefahrten oder aus für andere Kinematiken gleicher Bauart ausgeführten Bewegungsabläufen gewonnen Daten von Achspositionen zeitlich gesammelt und gespeichert. Je nachdem, mit welcher zeitlichen Auflösung Achspositionen erfasst werden, sind in entsprechenden zeitlichen Abständen Kombinationen von Achspositionen hinterlegt. Beispielsweise wird ein Trace in einem csv-Dateiformat bereitgestellt.

Bei einer Simulation wird festgelegt, mit welcher zeitlichen Auflösung ein Simulationsergebnis errechnet werden soll. Somit liegen bei Bedarf Daten zu annähernd kontinuierlichen Bewegungsabläufen vor. Auch eine Simulation kann als CSV-Datei bereitgestellt werden.

Erfindungsgemäß werden die Kompensationswerte aufgrund der Achssensorfehler und deren Fehlerfortpflanzung oder Nachlaufwege und deren Abweichungsfortpflanzung für auf die Kinematik zugeschnittene Bewegungsabläufe ermittelt und somit eine unnötig pessimistische Abschätzung von Kompensationen vermieden. Kompensationen von Überwachungszonen oder Geschwindigkeiten oder Winkeln, die aufgrund von Bewegungsabläufen entstehen könnten, die die Kinematik im Betrieb nicht durchführen wird, sind vorteilhafterweise für die Anpassung der Sicherheitsfunktion nicht zu berücksichtigen.

Erfindungsgemäß umfasst die Sicherheitsfunktion eine sichere Zonenüberwachung, eine sichere Orientierung und/ oder eine sichere kartesische Geschwindigkeit. Bei der sicheren Zonenüberwachung werden Zonen vorgegeben, die sich bewegende Abschnitte der Kinematik umgeben oder umhüllen. Aus den sicheren Achspositionen kann auf die Position und Orientierung dieser Zonen geschlossen werden. Die ermittelten Zonen werden daraufhin überprüft, ob sie die für die Kinematik definierten Arbeitsraumzonen verlassen. Wird so ein Zustand festgestellt, wird eine Sicherheitsfunktion ausgelöst, was beispielsweise ein sicherer Stopp oder eine reduzierte Geschwindigkeit sein kann.

Ebenso findet eine Kollisionsüberwachung mit in der Arbeitsumgebung der Kinematik definierten Schutzzonen statt und im Falle einer Überlappung der beiden Zonen, also der Kinematikzone mit der Schutzzone, wird eine Sicherheitsfunktion ausgelöst. Beispielsweise ist die Zonenüberwachung derart ausgebildet, und insbesondere die Zonengröße so dimensioniert, dass auch im Falle einer ausgelösten Sicherheitsreaktion, wie eines sicheren Halts, die Arbeitsraumzone nicht verlassen wird oder ein Überlappen mit einer Schutzzone verhindert wird.

Erfindungsgemäß werden als Kompensationswerte ein Positionsfehlerbetrag, ein Winkelfehlerbetrag und/ oder ein Geschwindigkeitsfehlerbetrag ermittelt. Der Kompensationswert wird ermittelt, um eine Kompensation für Größen vorzunehmen, die durch die Sicherheitsfunktion verwendet werden, um das Über- oder Unterschreiten bestimmter Grenzwerte zu überwachen. Beispielsweise werden Positionen von Achsen oder Winkel oder Orientierungen von Achsen und somit beispielsweise von Werkzeugen oder anderen Teilen am Endeffektor, um den zugehörigen Kompensationswert ergänzt.

Der Kompensationswert ist vorteilhaft bereits der Wert, um den die Sicherheitsfunktion ohne weitere Berechnungen angepasst wird. Beispielsweise handelt es sich direkt um eine Länge, um die Überwachungszonen zu vergrößern bzw. Arbeitszonen zu verkleinern sind. Beispielsweise handelt es sich um Winkel, die bei der Sicherheitsfunktion Sichere Orientierung zu berücksichtigen sind, um die Achsfehler sicher zu kompensieren. Ferner handelt es sich beispielsweise um Geschwindigkeitsbeträge, um die nicht zu überschreitende Geschwindigkeitsgrenzwerte zu reduzieren sind. Bei Geschwindigkeitsgrenzwerten ist zu beachten, dass Geschwindigkeiten in der Regel auf mindestens zwei Achspositionen basierend berechnet werden und der Grenzwert unter Berücksichtigung der Fehler und deren Fortpflanzung niedriger angesetzt werden muss.

Gemäß einer Ausgestaltung wird ferner ein zeitlicher Fehler bei der zeitlichen Abtastung jeweiliger Achssensoren bereitgestellt. Somit kann ein Versatz bei der zeitlichen Abtastung berücksichtigt werden und damit weitere Ungenauigkeiten der Achssensoren. Sind die maximalen Achsgeschwindigkeiten bekannt, kann aus dem Versatz ein zusätzlicher Positionsfehler berechnet werden, der ebenfalls beim Ermitteln des Kompensationswertes einfließt.

Gemäß einer Ausgestaltung werden ferner maximale Dynamikwerte der jeweiligen Achsen bereitgestellt. Beispielsweise wird eine maximale Geschwindigkeit einer Achse vorgegeben oder Beschleunigungsbereiche von Achsen. Zusammen mit vorgebbaren Wertebereichen wird die Ermittlung des Kompensationswertes somit noch spezifischer auf die Kinematik ausgelegt und unnötig hohe Kompensationen können vorteilhaft vermieden werden. Beispielsweise führt die Vorgabe einer limitierten Geschwindigkeit zu einem kleineren Nachlaufweg der jeweiligen Achse.

Gemäß einer Ausgestaltung werden weitere Parameter oder die maximalen Dynamikwerte während eines Betriebs der Mehrachskinematik ermittelt. Vorteilhaft können die weiteren Parameter oder maximalen Dynamikwerte in einer Probefahrt ermittelt werden oder während des Betriebs zur Laufzeit überprüft werden. Stellen sich Abweichungen heraus, können die Kompensationswerteneu ermittelt werden, um ein Sicherheitsrisiko zu vermeiden.

Gemäß einer Ausgestaltung wird die Sicherheitsfunktion in Abhängigkeit von dem Kompensationswert angepasst. Sobald die maximalen Fehlerwerte sowie die geometrischen Parameter und die Trajektorien für die konkrete Mehrachskinematik bereitgestellt wurden bzw. bekannt sind, kann der Kompensationswert ermittelt werden, der dann je nach vorgesehener Sicherheitsfunktion für eine oder mehrere Größen der Sicherheitsfunktion von dieser berücksichtigt wird.

Ist beispielsweise eine Zonenüberwachung vorgesehen, wird der Positionsfehler, der sich für die verschiedenen Segmente der Kinematik ergibt, und ein Orientierungsfehler beispielsweise des Endeffektors, ermittelt. Beide Fehlerwerte wirken als Kompensationswert für die Größen, die mit der Sicherheitsfunktion überwacht werden, in diesem Beispiel für die Abmessungen von Zonen.

Diese Anpassung erfolgt vorzugsweise automatisch durch die Sicherheitsfunktion. Beispielsweise informiert ein Software-Tool im Engineering, das auch die Schnittstelle für die Eingabe der Daten für den Nutzer bildet, den Nutzer lediglich über die vorgenommene Anpassung. Sobald für die Funktion ein Kompensationswert verfügbar ist, werden die zu überwachenden Größen oder Grenzwerte entsprechend angepasst. Ist eine Geschwindigkeitsüberwachung vorgesehen, wird für mehrere Überwachungspunkte anhand deren Positionsfehlern ein Geschwindigkeitsfehler berechnet und dieser wird beim Einrichten einer Grenzgeschwindigkeit beachtet. Ferner kann ein ermittelter Orientierungsfehler für eine Orientierungsüberwachung verwendet werden und einen Grenzwinkel um den entsprechenden Kompensationswert verkleinern.

Gemäß einer Ausgestaltung wird der Kompensationswert für die mindestens eine Größe in Abhängigkeit von einer einnehmbaren Stellung oder Position der Mehrachskinematik ermittelt und hinterlegt. Eine Kompensation wird demnach nicht global berechnet und für die gesamte Bewegung der Kinematik einheitlich angewendet, sondern es wird beispielsweise eine Tabelle angelegt, in der verschiedenen Kinematikpositionen oder Bereichen von Kinematikpositionen ein Kompensationswert zugeordnet wird. Dieses Vorgehen kann als Anlegen einer Genauigkeitskarte angesehen werden. Dadurch wird beispielsweise ein hoher Kompensationswert nur dann verwendet, wenn sich die Kinematik auch in dem Fahrbereich befindet, in dem entsprechend hohe Fehler oder axiale Nachlaufwege potentiell auftreten können. Die Genauigkeitskarte wird beispielsweise im Kinematik-Koordinatensystem, d.h. bezogen auf den Kinematikursprung im Weltkoordinatensystem, d.h. bezogen auf ein Umgebungssystem, in dem der Roboter arbeitet, oder direkt anhand der Achsstellungen gespeichert.

Gemäß einer Ausgestaltung wird die Sicherheitsfunktion im Betrieb in Abhängigkeit von dem Kompensationswert und einer aktuellen Stellung oder Position der Mehrachskinematik angepasst. Eine hinterlegte Genauigkeitskarte kommt vorteilhaft während des Betriebs zum Einsatz, um den jeweils aktuell ausreichend hohen Kompensationswert, der zugleich optimiert ist und unnötige restriktive Kompensationen vermeidet, anzuwenden.

Gemäß einer Ausgestaltung greift die Sicherheitsfunktion im Betrieb auf Kompensationswerte, die nach einem der oben beschriebenen Verfahren bestimmt wurden, zurück. Somit ist ein optimierter Sicherheitsbetrieb gewährleistet, der optimiert ist hinsichtlich nötiger Fehlerkompensation und unnötig generalisierter Fehlerabschätzung. Die Sicherheitsfunktion wird beispielsweise im Engineering um die ermittelten Kompensationswerte für alle Größen der Sicherheitsfunktionen, beispielsweise Positionsfehler, Orientierungsfehler und Geschwindigkeitsfehler, ergänzt. Die Größen wie Überwachungszonen, Grenzgeschwindigkeiten, Grenzwinkelabweichungen, werden um die entsprechenden Kompensationswerte aus Positions- und Winkelfehlern und deren Fehlerfortpflanzung oder aus axialen Nachlaufwegen und deren potenzieller Fortpflanzung angepasst. Im Betrieb werden dann Zonenüberwachungen, Orientierungsüberwachung sowie Geschwindigkeitsüberwachung mit den angepassten Größen ausgeführt.

Die Erfindung betrifft ferner ein Computerprogrammprodukt, umfassend Befehle, die bei der Ausführung des Programms durch einen Computer diesen veranlassen, das Verfahren nach einem der oben beschriebenen Ausgestaltungen auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als Computer kommt jede programmgesteuerte Einrichtung, insbesondere eine Steuereinrichtung in Frage, wie zum Beispiel ein Mikroprozessor, oder ein Industrie-PC.

Die Erfindung wird nachfolgend anhand von Ausführungsbeispielen mit Hilfe der Figuren näher erläutert. Es zeigen:

Figur 1    eine schematische Darstellung einer Eingabeeinrichtung gemäß einem ersten Ausführungsbeispiel der Erfindung;

Figur 2    ein schematisches Ablaufdiagramm zur Veranschaulichung des Verfahrens gemäß einem zweiten Ausführungsbeispiel der Erfindung;

Figur 3    eine schematische Darstellung einer Mehrachskinematik zur Veranschaulichung des Verfahrens gemäß einem dritten Ausführungsbeispiel der Erfindung.

In den Figuren sind funktionsgleiche Elemente mit denselben Bezugszeichen versehen, sofern nichts anderes angegeben ist.

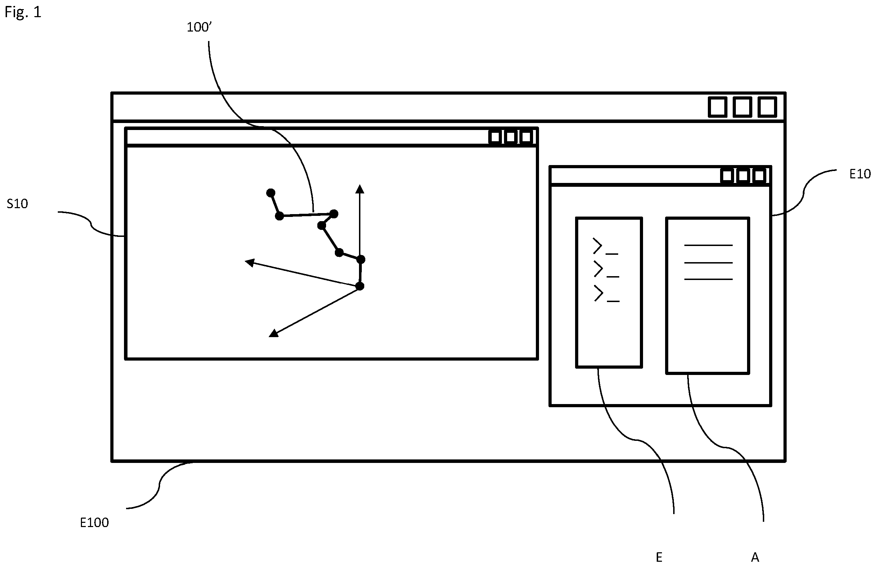

In Figur 1 ist eine Realisierung einer Eingabeeinrichtung E10 gemäß einem ersten Ausführungsbeispiel der Erfindung dargestellt, die beispielsweise als grafische Nutzeroberfläche auf einem HMI realisiert ist. Beispielsweise handelt es sich um eine fensterbasierte Lösung, die sich in Hinblick auf Design und Handhabung in ein Engineering Tool E100 einfügt. Mittels des Engineering Tools E100 erfolgt in üblicher Weise eine Projektierung eines Anwendungsszenarios, bei dem eine Mehrachskinematik zum Einsatz kommt. Dabei wird in einer Anwendung die Mehrachskinematik beispielsweise verwendet, um mit einem an dem Endeffektor der Mehrachskinematik befestigten Werkzeug eine Bearbeitung eines Werkstücks durchzuführen. In der Projektierungsphase werden für diese Anwendung beispielsweise Daten der Mehrachskinematik sowie Umgebungsdaten in dem Engineering Tool erfasst und verschiedenste Funktionen eingerichtet. Beispielsweise werden mithilfe von Funktionsbausteinen Bewegungsabläufe eingerichtet, die von der Kinematik im Betrieb auszuführen sind.

Ferner werden hier auch Überwachungsfunktionen eingerichtet. Beispielsweise werden Zonen vorgegeben, welche als Sicherheitszonen in der Umgebung der Kinematik von dieser nicht durchfahren werden sollen. Für eine Überwachungsfunktionen werden beispielsweise Arbeitszonen festgelegt, welche einzelne Segmente der Mehrachskinematik mit vorgegebenen geometrischen Körpern umhüllen und welche Räume definieren, welche ebenfalls nicht mit Sicherheitszonen überlappen dürfen.

Die Definition solcher Sicherheitsfunktionen erfolgt im Rahmen der Projektierung mittels des Engineering Tools E100. Beispielsweise ist dafür vorgesehen, eine simulierte Darstellung einer Mehrachskinematik 100' in einem Visualisierungsfenster S10 darzustellen und damit das Anwendungsszenario beispielsweise inklusive einer Umgebung zu visualisieren. Beispielsweise kann so das Abfahren von Bewegungsabläufen im Raum unter Berücksichtigung einer Umgebung und definierten Sicherheits- und Arbeitszonen simuliert werden. Hier können ferner auch Sicherheitsreaktionen wie das Einleiten von sicheren Stoppvorgängen simuliert werden.

Die mittels des Engineering Tools definierten Sicherheitsfunktionen basieren auf Positionsdaten, die diese von Achssensoren der verschiedenen angetriebenen Achsen der Mehrachskinematik erhalten. Entscheidend für Sicherheit oder Safety an einer Anlage ist somit die Zuverlässigkeit der erhaltenen Positionsdaten. Dafür sind übliche Safety Mechanismen vorgesehen, um beispielsweise auf einen Ausfall eines Sensors entsprechend zu reagieren.

Ferner entscheidend für die Sicherheit ist es, dass eine Möglichkeit besteht, axiale Nachlaufwege zu berücksichtigen.

Es ist nun die Eingabeeinrichtung E10 vorgesehen, welche ein Eingabemittel E oder eine Eingabemaske aufweist. Dort ist für den Nutzer eine Eingabemöglichkeit vorgesehen zum Eingeben von Fehlerwerten von Achssensoren aufgrund von axialen Nachlaufwegen.

Je nach Ausgestaltung des Engineering Tools E100 werden geometrische Parameter der Mehrachskinematik bereits an anderer Stelle projektiert. Beispielsweise werden diese Daten auch im Rahmen einer Bewegungsplanung benötigt, die die Trajektorien für die Mehrachskinematik erstellt. Ebenso ist es aber möglich, dass auch diese geometrischen Parameter mittels des Eingabemittels E durch den Nutzer separat für die Eingabeeinrichtung E10 zur Einrichtung des sicheren Betriebs vorgegeben werden.

Die Eingabeeinrichtung E10 dient als Schnittstelle, über welche der Nutzer alle erforderlichen Eingaben tätigen kann, damit ein zur Projektierungszeit ablaufendes Softwareprogramm daraus Kompensationswerte berechnen kann. Diese Kompensationswerte sind je nach Sicherheitsfunktionen, welche projektiert werden, unterschiedlich ausgestaltet. Für die oben beschriebene Zonenüberwachung werden als Kompensationswerte über das Ausgabemittel A Kompensationswerte für alle zu überwachenden Zonen ausgegeben. Somit wird beispielsweise angegeben, um welchen Längenbetrag beteiligte Dynamikzonen oder Segmentzonen, je nach Ausprägung entlang einzelner Koordinatenrichtungen, vergrößert werden müssen, um auch im Falle einer Sicherheitsreaktion, die zu Nachlaufwegen einzelner oder mehrerer Achsen führt, diese Unsicherheit der tatsächlichen Position der Achsen sicher zu kompensieren.

Beispielsweise ist die Eingabeeinrichtung E10 derart ausgestaltet, dass maximal mögliche Nachlaufwege aller beteiligten Achsen eingetragen werden. Je nachdem, welche Sicherheitsfunktionen bereits projektiert wurden, werden entsprechend nun alle in den jeweiligen Sicherheitsfunktionen zu berücksichtigenden Kompensationswerte ausgegeben. Ist beispielsweise zusätzlich die Funktion "Sichere Orientierung" projektiert, so wird über das Eingabefeld ein Nachlaufweg in Form eines Winkelfehlers, der aufgrund der Trägheit bei einer Drehachse auftreten kann, für die mit der Sicherheitsfunktion "Sichere Orientierung" zu überwachenden Drehachse erfasst und entsprechend ein Kompensationswert in Form eines Kompensationswinkels angegeben, der ein Kugelsegment als Toleranzbereich beschreibt.

Zusätzlich können auch fehlerbehaftete Größen berücksichtigt werden. Mittels Achssensoren erhaltene Positionsdaten sind typischerweise solche fehlerbehafteten Größen. Da die Ermittlung von Positionen eines Endeffektors oder einzelner Segmente der Mehrachskinematik oftmals auf Ausgabedaten mehrerer verschiedener Achssensoren beruht, muss auch das Zusammenwirken von Fehlerbeiträgen mehrerer Sensoren oder Geber berücksichtigt werden. Je nachdem, welche Massen, Trägheiten und Geschwindigkeiten an Achsen vorherrschen können die Kompensationseffekte aufgrund von axialen Nachlaufwegen oder Sensorauflösungen überwiegen. Vorteilhafterweise werden beide Effekte ermittelt und die resultierenden maximalen Kompensationswerte letztlich berücksichtigt.

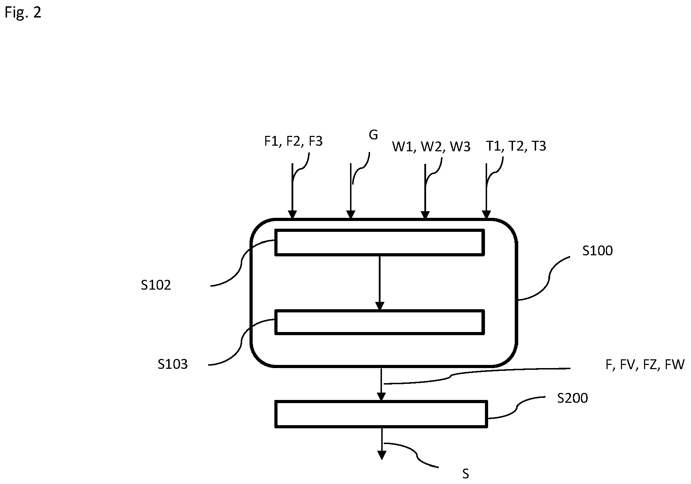

Figur 2 veranschaulicht mit einem Ablaufdiagramm ein Verfahren gemäß einem zweiten Ausführungsbeispiel der Erfindung. Dabei erfolgt in einem ersten Schritt ein Einrichten S100, an dessen Ende ein Kompensationswert F ausgegeben wird. Anhand dieses Kompensationswertes F wird in einem zweiten Schritt ein sicheres Betreiben S200 der Mehrachskinematik ermöglicht. Während des Betriebs ist dabei mindestens eine Sicherheitsfunktion S im Betrieb. Beispielsweise ist die Funktion "Sichere Geschwindigkeitsüberwachung" aktiviert, welche für einzelne Achsen Höchstgeschwindigkeiten vorgibt und bei einem Überschreiten der Höchstgeschwindigkeit einen Sicherheitszustand einleitet. Beispielsweise wird das Überschreiten an einem Ausgang angezeigt oder ein Stoppen der Kinematik eingeleitet, ein sogenannter STO.

Dabei wird berücksichtigt, dass eine mithilfe von Sensoren oder Gebern festgestellte Geschwindigkeit einzelner Achsen oder eines Teils der Mehrachskinematik, dessen Geschwindigkeit sich aus dem Zusammenwirken mehrerer Achsen ergibt, fehlerbehaftet ist. Für die Geschwindigkeitsermittlung gehen zu vorgegebenen Zeitpunkten erfasste Positionen ein. Diese Positionen sind fehlerbehaftet und entsprechend ist auch die daraus abgeleitete Geschwindigkeit fehlerbehaftet.

Aus den Fehlern, die den beiden Positionsinformationen anhaften, erfolgt als Teil des Einrichtens S101 ein Ermitteln S103 des Kompensationswertes F, hier unter anderem eines Geschwindigkeitsfehlerbetrages FV der Geschwindigkeit nach den Methoden der Fehlerfortpflanzung. Dieser ist gerade so groß, dass der Worst Case sich addierender Fehler abgedeckt ist und zugleich keine zu pessimistische Abschätzung erfolgt.

Um wiederum die Positionsfehler richtig zu ermitteln, die dem Teil der Kinematik anhaften, der mit der Funktion "Sichere Geschwindigkeit" überwacht wird, beispielsweise der Endeffektor, werden die Positionsfehler aller beteiligten Achsen bzw. deren jeweiliger Achssensoren ermittelt und dann unter Anwendung von Fortpflanzungsalgorithmen ein Fehler der jeweiligen Position ermittelt. Einem Softwareprogramm, welches die Ermittlung der Fehlerbeträge in der Einrichtphase vornimmt, werden dafür die maximalen Positionsfehler der beteiligten Achsen als maximale Fehlerwerte F1, F2, F3 bereitgestellt S102. Neben dem Positionsfehler aufgrund des Ausgabewertes der Sensoren gehen auch Fehler bei der zeitlichen Abtastung der Sensoren ein. Je zu einem Zeitpunkt erfasster Position ergibt sich somit ein Gesamtpositionsfehlerbetrag FZ. Jeweilige Gesamtpositionsfehler werden entsprechend für die Ermittlung des Geschwindigkeitsfehlerbetrages FV berücksichtigt.

Der Gesamtpositionsfehlerbetrag FZ kann zudem für weitere aktivierte Sicherheitsfunktionen verwendet werden, beispielsweise um die Positionsfehler abzuschätzen, die für die Zonenüberwachung ausschlaggebend sind und Vergrößerungen der Sicherheitszonen nötig machen. Für eine zusätzliche aktivierte Sicherheitsfunktion "Sichere Orientierung" kann zusätzlich ein Winkelfehlerbetrag FW ausgegeben werden, der den Kegel definiert, innerhalb dessen die Orientierung eines Werkzeuges oder anderen Teils der Kinematik im Worst Case zu erwarten ist.

Neben den maximalen Fehlern F1, F2, F3 werden auch die geometrischen Parameter G der Mehrachskinematik der Eingabeeinrichtung bereitgestellt. Überdies werden Trajektorien T1, T2, T3 bereitgestellt, welche die relevanten Trajektorien der Mehrachskinematik im späteren Betrieb beschreiben.

Für Szenarien, in welchen die später zu durchfahrenden Trajektorien zum Zeitpunkt der Einrichtung des sicheren Betriebs noch nicht bekannt sind, werden maximale Wertebereiche W1, W2, W3 für beteiligte Achsen 1, 2, 3 bereitgestellt. Beispielsweise werden ein maximaler linearer Verfahrbereich einer linearen Achse angegeben, sowie maximale Winkel, die den Schwenkbereich beteiligter drehbar gelagerter Achsen in eine oder mehrere Richtungen beschreiben. Mittels dieser Angaben sind in der Einrichtphase alle im Betrieb potentiell einnehmbaren Stellungen der Mehrachskinematik ableitbar.

Aus den derart insgesamt zur Verfügung gestellten Angaben können die Fehlerbeträge nun auf eine individuelle Kinematik und deren individuelle vorgesehene Bewegungsabläufe zugeschnitten bereitgestellt werden. Insbesondere wird ein Fehlerbetrag für eine Größe als der Maximalfehlerbetrag ausgegeben, der sich während des Abfahrens einer Trajektorie T1 ergibt. Dieser kann dann mit Bezug zu der Trajektorie T1 abgelegt oder gespeichert werden. In anderen Varianten wird der Maximalfehlerbetrag für alle möglichen Trajektorien ermittelt. In diesem Fall muss im späteren Betrieb nicht zwischen Fehlerwerten verschiedener Trajektorien unterschieden werden, jedoch handelt es sich gegebenenfalls um einen zu pessimistisch berechneten Fehler.

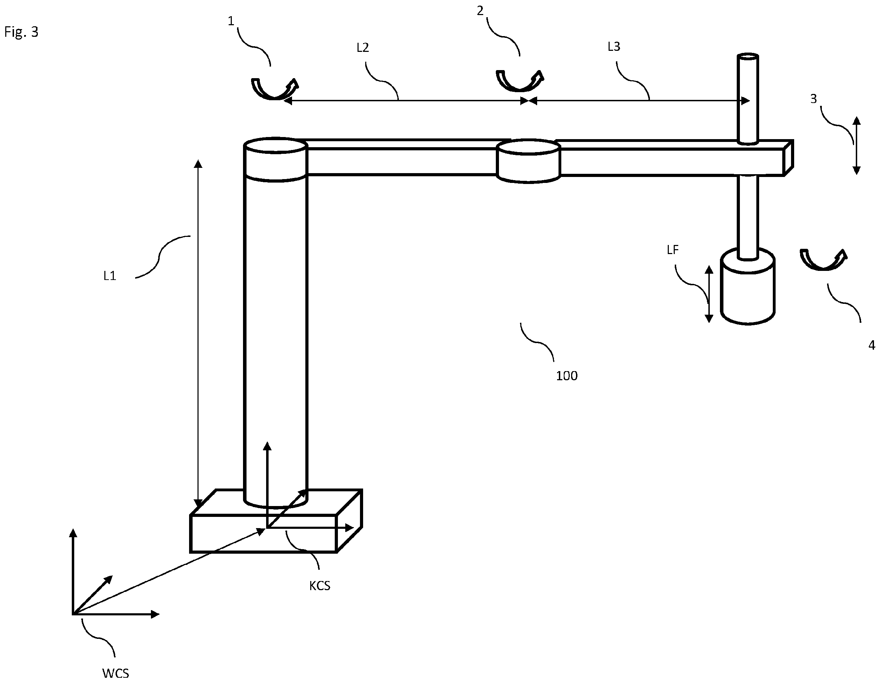

In Figur 3 ist schematisch eine Mehrachskinematik 100 abgebildet mit auf die Kinematik bezogenem Kinematik-Koordinatensystem KCS und einem Welt-Koordinatensystem WCS der Umgebung. Es ist eine erste Achse 1 als Drehachse vorgesehen, welche sich am Ende eines ersten Segments L1 befindet, das in seiner Ausrichtung mit einer vertikalen Achse des Kinematik-Koordinatensystems zusammenfällt. Ein Nutzer gibt als geometrische Parameter der Mehrachskinematik 100 die Länge des ersten Segments L1, sowie ferner die Länge des zweiten Segments L2 und die Länge des dritten Segments L3 ein. Das zweite Segment L2 startet von der ersten Drehachse 1 aus und ist mit dem dritten Segment L3 über ein weiteres Drehgelenk verbunden, das die zweite Achse 2 bildet. Es ist zudem eine Hubachse 3 am dritten Segment vorgesehen, die vertikal verfahrbar ist. Schließlich ist noch eine letzte Achse 4 als drehbare Achse eingerichtet, die beispielsweise zugleich einen Flansch mit Abmessung LF bildet.

Zudem gibt der Nutzer folgende Geberfehler als maximale Fehlerwerte vor:

- Geberfehler F1 Achse 1: 1/10°

(fortgesetzt)

| | |
|---|---|
| - Geberfehler F2 Achse 2: | 1/10° |
| - Geberfehler F4 Achse 4: | 1/10° |
| - Geberfehler F3 Achse 3: | 1mm |

Die Fehler in den Eingabewinkeln und den Eingabeparametern pflanzen sich wie folgt in die berechnete Position des Flansches fort und ergeben einen kartesischen Positionsfehler **Fpos** des Flansches:

$$Fpos = Fa1 + Fa2 + Fa3$$

Dabei sind **F**a1, **F**a2, **F**a3 die Fehlerbeiträge der Achsen 1, 2, 3, die sich alle aufaddieren.

Für den Fehlerbeitrag Fa2 ist folgende Herleitung anzuwenden:

Gegeben sei ein Positionsvektor $v$, der um einen Windel $\alpha$ gedreht wird. Eine Winkelabweichung von $e_\alpha$ führt zu einem Positionsfehler $F = \|v - v'\|$ von maximal $2 * \sin\left(\frac{e_\alpha}{2}\right) * \|v\|$. Ist $\alpha$ in Grad gegeben, gilt $F < 2 * \sin\left(\frac{e_\alpha * 2\pi}{2*360}\right) * \|v\|$. Dies gilt, da die falsche Position $v'$ und die korrekte Position $v$ sowie der Mittelpunkt der Rotation ein gleichschenkliges Dreieck mit Spitzwinkel $e_\alpha$ bilden.

Somit ergibt sich vektoriell für **F**a2 abhängig von den Achswerten a1 und a2:

$$Fa2 = 2 * \sin\left(\frac{F2 * \pi}{360}\right) * L3 * \begin{pmatrix} |\sin(a1 + a2)| \\ |\cos(a1 + a2)| \\ 0 \end{pmatrix}$$

Der Fehlerbeitrag **F**a1 ergibt sich analog zu:

$$Fa1 = 2 * \sin\left(\frac{F1 * \pi}{360}\right) * \left( L2 * \begin{pmatrix} |\sin(a1)| \\ |\cos(a1)| \\ 0 \end{pmatrix} + L3 * \begin{pmatrix} |\sin(a1 + a2)| \\ |\cos(a1 + a2)| \\ 0 \end{pmatrix} \right)$$

Dabei werden nach dem Superpositionsprinzip bei mehreren fehlerbehafteten Eingängen die Werte in den Ausgängen addiert.

Der Fehlerbeitrag Fa3 von (Linear-)Achse 3 fließt direkt in den z-Anteil des Gesamtpositionsfehlers ein:

$$Fa3 = \begin{pmatrix} 0 \\ 0 \\ F3 \end{pmatrix}$$

Zusätzlich kann eine betragsmäßige Abschätzung über alle möglichen Achseingangswerte hinweg erfolgen, sodass sich für das angegebene Beispiel ergibt:

$$\left|\|Fpos\|\right| \leq \|Fa1\| + \|Fa2\| + \|Fa3\|$$
$$\leq 2 * \sin\left(\frac{100 * \pi}{360000}\right) * (600mm) + 2 * \sin\left(\frac{100 * \pi}{360000}\right) * (300mm) + 1mm$$
$$= 2{,}570796mm$$

Da für die beispielhaft abgebildete Kinematik, beispielsweise ein Scara-Roboter, eine sichere Zonenüberwachung aktiv sein soll, werden die Radien bzw. Quaderhalblängen vorgesehener Kinematik-Schutz- oder Arbeitsräume um den Wert Fpos angepasst. Bei höheren Genauigkeitsanforderungen können die einzelnen Halblängen unter Berücksichtigung der relevanten Achsstellungen auch individuell angepasst werden.

Zusätzlich wird auch eine Sicherheitsfunktion eingerichtet, die die Orientierung des Flansches sicher überwacht.

Aus den Fehlerbeträgen F1, F2, F4 pflanzen sich Fehler in die berechnete Orientierung unverändert fort. Im Worst Case ergibt sich für die gegebenen Kinematikwerte somit der Fehler Frot:

$$Frot = \frac{100° + 100° + 100°}{1000} = \frac{300°}{1000}$$

Auch der Kompensationswert Frot wird von der Überwachungsfunktion verwendet, um eine Anpassung des Grenzwerts vorzunehmen. In diesem Fall wird das Kugelsegment, innerhalb dessen sich die Orientierung des Flansches befinden muss, damit keine Sicherheitsfunktion eingeleitet wird, im Engineering entsprechend verkleinert.

Ist zusätzlich eine Geschwindigkeitsüberwachung als Sicherheitsfunktion aktiv, so ergibt sich die Geschwindigkeit eines Punktes analog aus dem Ergebnis der Vektorsubtraktion aus der zuletzt berechneten Position und einer aktuellen Position unter Berücksichtigung der verstrichenen Zeit. Die Fehler werden für den Worst-Case entsprechend additiv berücksichtigt, um die Grenzgeschwindigkeit entsprechend anzupassen.

Zusammenfassend wird mit der vorgeschlagenen Methode und der vorgeschlagenen Eingabeeinrichtung einem Nutzer einer sicherheitsüberwachten Mehrachskinematik eine einfache und wenig fehleranfällige Möglichkeit geschaffen, Kompensationen bei der Sicherheitsüberwachung einzurichten, die sensorbedingte Fehler oder axiale Nachlaufwege berücksichtigen, und gleichzeitig nur die minimal notwendige Kompensation sicherstellen. Die Erfindung ist vorteilhaft für SCARA-Roboter, kartesisches Portal, Rollenpicker, Schwenkarm, beliebige Serienkinematiken oder Parallelkinematiken einsetzbar. Wird zusätzlich eine Genauigkeitskarte verwendet, kann die mittlere Kompensation noch weiter reduziert werden.

## Patentansprüche

1. Verfahren zum Einrichten (S100) eines sicheren Betriebs einer Mehrachskinematik (100), wobei der sichere Betrieb eine Sicherheitsfunktion (S) umfasst, wobei die Sicherheitsfunktion (S) eine sichere Zonenüberwachung, eine sichere Orientierung oder eine sichere kartesische Geschwindigkeit umfasst,
wobei die Sicherheitsfunktion auf jeweiligen Achspositionen von jeweiligen Achsen (1, 2, 3) der Mehrachskinematik (100) basiert, aufweisend die folgenden Schritte:

   - Bereitstellen (S102) von Fehlerwerten (F1, F2, F3) jeweiliger Achsen, nämlich Sensorauflösungen oder axialen Nachlaufwegen,
   - Ermitteln (S103) eines Kompensationswertes (F) für mindestens eine Größe der Sicherheitsfunktion (S) in Abhängigkeit von den Fehlerwerten (F1, F2, F3), von geometrischen Parametern (G) der Mehrachskinematik und von sich aus Trajektorien (T1, T2, T3) der Mehrachskinematik (100) ergebenden Achswerten der jeweiligen Achsen (1, 2, 3), wobei der Kompensationswert (F) ein Positionsfehlerbetrag, ein Winkelfehlerbetrag oder ein Geschwindigkeitsfehlerbetrag ist und ermittelt wird, um eine Kompensation für Größen vorzunehmen, die durch die Sicherheitsfunktion (S) verwendet werden, um das Über- oder Unterschreiten bestimmter Grenzwerte zu überwachen,

   **dadurch gekennzeichnet, dass**

   die Kompensationswerte aufgrund von Achssensorfehlern und
   deren Fehlerfortpflanzung oder Nachlaufwegen und deren Abweichungsfortpflanzung für auf die Kinematik zugeschnittene Bewegungsabläufe ermittelt werden.

2. Verfahren nach Anspruch 1, wobei ferner die geometrischen Parameter (G) der Mehrachskinematik (100) für das Einrichten bereitgestellt werden (S20).

3. Verfahren nach einem der vorstehenden Ansprüche, wobei die Trajektorien (T1, T2, T3) aus einer Menge von für die Mehrachskinematik (100) vorgebbaren Trajektorien abgeleitet werden.

4. Verfahren nach einem der vorstehenden Ansprüche, wobei die Trajektorien (T1, T2, T3) aus maximalen Wertebereichen (W1, W2, W3) für die jeweiligen Achsen (1, 2, 3) abgeleitet werden.

5. Verfahren nach einem der vorstehenden Ansprüche, wobei die Trajektorien (T1, T2, T3) eine Kombination von Achswerten aller Achsen über eine Zeit beschreiben und basierend auf einem Trace oder einer Simulation oder einer Beobachtung von Live-Daten während einer Bewegung der Mehrachskinematik gebildet werden.

6. Verfahren nach einem der vorstehenden Ansprüche, wobei ferner ein zeitlicher Fehler bei der zeitlichen Abtastung jeweiliger Achssensoren bereitgestellt wird.

7. Verfahren nach einem der vorstehenden Ansprüche, wobei ferner maximale Dynamikwerte der jeweiligen Achsen bereitgestellt werden.

8. Verfahren nach einem der vorstehenden Ansprüche, wobei weitere Parameter oder die maximalen Dynamikwerte während eines Betriebs der Mehrachskinematik (100) ermittelt werden.

9. Verfahren nach einem der vorstehenden Ansprüche, wobei die Sicherheitsfunktion (S) in Abhängigkeit von dem Kompensationswert (F) angepasst wird.

10. Verfahren nach einem der vorstehenden Ansprüche, wobei der Kompensationswert (F) für die mindestens eine Größe in Abhängigkeit von einer einnehmbaren Stellung oder Position der Mehrachskinematik (100) ermittelt und hinterlegt wird.

11. Verfahren nach Anspruch 10, wobei die Sicherheitsfunktion (S) im Betrieb in Abhängigkeit von dem Kompensationswert (F) und einer aktuellen Stellung oder Position der Mehrachskinematik (100) angepasst wird.

12. Verfahren zum sicheren Betreiben (S200) einer Mehrachskinematik (100), wobei der sichere Betrieb eine Sicherheitsfunktion (S) umfasst, die eine sichere Zonenüberwachung, eine sichere Orientierung oder eine sichere kartesische Geschwindigkeit umfasst, wobei die Sicherheitsfunktion (S) auf jeweiligen Achspositionen von jeweiligen Achsen (1, 2, 3) der Mehrachskinematik (100) basiert, wobei die Sicherheitsfunktion (S) im Betrieb auf Kompensationswerte (F) zugreift, die mit einem Verfahren nach einem der Ansprüche 1 bis 11 bestimmt werden.

13. Computerprogrammprodukt, umfassend Befehle, die bei der Ausführung des Programms durch einen Computer diesen veranlassen, das Verfahren nach einem der Ansprüche 1-12 auszuführen.

**Claims**

1. Method for setting up (S100) safe operation of a multi-axis kinematic system (100), safe operation comprising a safety function (S), the safety function (S) comprising safe zone monitoring, a safe orientation or a safe Cartesian speed, the safety function being based on respective axis positions of respective axes (1, 2, 3) of the multi-axis kinematic system (100), comprising the following steps:

   - providing (S102) error values (F1, F2, F3) of respective axes, specifically sensor resolutions or axial run-on distances,
   - ascertaining (S103) a compensation value (F) for at least one variable of the safety function (S) on the basis of the error values (F1, F2, F3), on the basis of geometric parameters (G) of the multi-axis kinematic system and on the basis of axis values of the respective axes (1, 2, 3) that are obtained from trajectories (T1, T2, T3) of the multi-axis kinematic system (100), the compensation value (F) being a position error absolute value, an angle error absolute value or a speed error absolute value and being ascertained in order to carry out compensation for variables that are used by the safety function (S) in order to monitor when specific limit values are exceeded or fallen short of,

   **characterized in that**
   the compensation values on the basis of axis sensor errors and the error propagation or run-on distances thereof and the deviation propagation thereof are ascertained for motion sequences tailored to the kinematic system.

2. Method according to Claim 1, wherein the geometric parameters (G) of the multi-axis kinematic system (100) are furthermore provided (S20) for setting up.

3. Method according to either of the preceding claims, wherein the trajectories (T1, T2, T3) are derived from a set of trajectories that are predefinable for the multi-axis kinematic system (100).

4. Method according to one of the preceding claims, wherein the trajectories (T1, T2, T3) are derived from maximum value ranges (W1, W2, W3) for the respective axes (1, 2, 3).

5. Method according to one of the preceding claims, wherein the trajectories (T1, T2, T3) describe a combination of axis values of all axes over a time and are formed on the basis of a trace or a simulation or an observation of live data during a movement of the multi-axis kinematic system.

6. Method according to one of the preceding claims, wherein a timing error for the scanning of respective axis sensors over time is furthermore provided.

7. Method according to one of the preceding claims, wherein maximum dynamic values of the respective axes are furthermore provided.

8. Method according to one of the preceding claims, wherein further parameters or the maximum dynamic values are ascertained during operation of the multi-axis kinematic system (100).

9. Method according to one of the preceding claims, wherein the safety function (S) is adapted on the basis of the compensation value (F).

10. Method according to one of the preceding claims, wherein the compensation value (F) for the at least one variable is ascertained and stored on the basis of an adoptable attitude or position of the multi-axis kinematic system (100).

11. Method according to Claim 10, wherein the safety function (S) is adapted during operation on the basis of the compensation value (F) and a current attitude or position of the multi-axis kinematic system (100).

12. Method for safely operating (S200) a multi-axis kinematic system (100), safe operation comprising a safety function (S) that comprises safe zone monitoring, a safe orientation or a safe Cartesian speed, the safety function (S) being based on respective axis positions of respective axes (1, 2, 3) of the multi-axis kinematic system (100), wherein during operation the safety function (S) accesses compensation values (F) that are determined using a method according to one of Claims 1 to 11.

13. Computer program product comprising instructions that, when the program is executed by a computer, cause said computer to carry out the method according to one of Claims 1-12.

**Revendications**

1. Procédé de mise en place (S100) d'un fonctionnement en sécurité d'une cinématique multiaxes (100), dans lequel le fonctionnement en sécurité comprend une fonction de sécurité (S), dans lequel la fonction de sécurité (S) comprend une surveillance en sécurité de zone, une orientation en sécurité ou une vitesse cartésienne de sécurité,

   dans lequel la fonction de sécurité est basée sur des positions d'axe respectives des axes (1, 2, 3) respectifs de la cinématique multiaxes (100), comprenant les étapes ci-dessous consistant à :

   - fournir (S102) des valeurs d'erreur (F1, F2, F3) des axes respectifs, à savoir des résolutions de capteurs ou des distances de surcourse axiales,
   - déterminer (S103) une valeur de compensation (F) pour au moins une grandeur de la fonction de sécurité (S) en fonction des valeurs d'erreur (F1, F2, F3), des paramètres géométriques (G) de la cinématique multiaxes et des valeurs d'axe des axes (1, 2, 3) respectifs résultant de trajectoires (T1, T2, T3) de la cinématique multiaxes (100), la valeur de compensation (F) étant une valeur d'erreur de position, une valeur d'erreur d'angle ou une valeur d'erreur de vitesse et étant déterminée afin de mettre en œuvre une compensation pour des grandeurs utilisées par la fonction de sécurité (S) afin de surveiller le dépassement ou le sous-dépassement de certaines valeurs limites,

   **caractérisé en ce que**
   les valeurs de compensation sont déterminées en se basant sur des erreurs de capteur d'axe et sur leur propagation d'erreur ou leurs distances de surcourse et sur leur propagation d'écart pour des séquences de mouvement adaptées à la cinématique.

**2.** Procédé selon la revendication 1, dans lequel les paramètres géométriques (G) de la cinématique multiaxes (100) sont en outre fournis (S20) en vue de ladite mise en place.

**3.** Procédé selon l'une quelconque des revendications précédentes, dans lequel les trajectoires (T1, T2, T3) sont dérivées d'un ensemble de trajectoires pouvant être prédéterminées pour la cinématique multiaxes (100).

**4.** Procédé selon l'une quelconque des revendications précédentes, dans lequel les trajectoires (T1, T2, T3) sont dérivées de plages de valeurs maximales (W1, W2, W3) pour les axes (1, 2, 3) respectifs.

**5.** Procédé selon l'une quelconque des revendications précédentes, dans lequel les trajectoires (T1, T2, T3) décrivent une combinaison de valeurs d'axe de tous les axes sur une période de temps et sont formées en se basant sur une trace ou une simulation ou une observation de données en direct pendant un mouvement de la cinématique multiaxes.

**6.** Procédé selon l'une quelconque des revendications précédentes, dans lequel une erreur temporelle est en outre fournie lors de l'échantillonnage temporel des capteurs d'axe respectifs.

**7.** Procédé selon l'une quelconque des revendications précédentes, dans lequel des valeurs dynamiques maximales des axes respectifs sont en outre fournies.

**8.** Procédé selon l'une quelconque des revendications précédentes, dans lequel d'autres paramètres ou les valeurs dynamiques maximales sont déterminé(e)s pendant le fonctionnement de la cinématique multiaxes (100).

**9.** Procédé selon l'une quelconque des revendications précédentes, dans lequel la fonction de sécurité (S) est ajustée en fonction de la valeur de compensation (F).

**10.** Procédé selon l'une quelconque des revendications précédentes, dans lequel la valeur de compensation (F) pour la au moins une grandeur est déterminée et enregistrée en fonction d'une place ou d'une position pouvant être prise par la cinématique multiaxes (100).

**11.** Procédé selon la revendication 10, dans lequel la fonction de sécurité (S) est ajustée en cours de fonctionnement en fonction de la valeur de compensation (F) et d'une place ou d'une position actuelle de la cinématique multiaxes (100).

**12.** Procédé de fonctionnement en sécurité (S200) d'une cinématique multiaxes (100), dans lequel le fonctionnement en sécurité comprend une fonction de sécurité (S) qui comprend une surveillance en sécurité de zone, une orientation en sécurité ou une vitesse cartésienne de sécurité, dans lequel la fonction de sécurité (S) est basée sur des positions d'axe respectives des axes (1, 2, 3) respectifs de la cinématique multiaxes (100),
dans lequel la fonction de sécurité (S) accède en cours de fonctionnement à des valeurs de compensation (F) qui sont déterminées par un procédé selon l'une quelconque des revendications 1 à 11.

**13.** Produit de programme informatique, comprenant des instructions qui, lorsque le programme est exécuté par un ordinateur, l'amènent à mettre en œuvre le procédé selon l'une quelconque des revendications 1 à 12.

Fig. 1

EP 4 057 088 B1

Fig. 2

Fig. 3

EP 4 057 088 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190262993 A1